# EUROPEAN PATENT APPLICATION

(11) **EP 4 011 257 A1**
(43) Date of publication of application: **15.06.2022**
(21) Application number: 21020165.3
(22) Date of filing: 26.03.2021
(51) Int. Cl.: A47J 43/10

(54) **MULTIFUNCTIONAL COOKING ACCESSORY**

(30) Priority: 14.12.2020 ES 202032675 U
(71) Applicant: European Home Shopping, S.L., 28031 Madrid (ES)
(72) Inventor: Chacón, Alexander Anthony, 28023 Madrid (ES)
(74) Representative: Elósegui de la Peña, Iñigo

(57) **Abstract**

The device includes a work chamber (3), in which bottom a stub (4) is stablished as turning element for the three mechanisms of the device, been closing through a lid (5) that includes a superior seat (6), over which a manual operating control (8) is connectable with a push button (9) vertically movable that through a zipper provokes the turning of a male shaft (10) that passes through the lid (5), which is designed to selectively adapt a chopping element (13), a beating element (14) or a spinning element (15). An accessory highly versatile that does not require any kind of source of external energy to its activation and which is carried out in a manual mode is then obtained.

## Description

### TECHNICAL FIELD

The present invention relates to a cooking accessory that allows to carry out three functions with a same device, such as beating and chopping food, as well as spinning vegetables to remove the water that could remain over them after their cleaning process previous of his cook.

The object of the invention is therefore to provide an accessory highly versatile, that does not require any kind of source of external energy to its activation, which is carried out in a manual mode.

### BACKGROUND OF THE INVENTION

Numerous cooking accessories specially designed to conduct different functions are known, so that, to use each function, it is necessary to have a specific device, which implies an important volumetric occupation, clearly undesirable.

In a more specific way, accessories to spin vegetables to remove the water that could have remained over them once they have been cleaned to its duly sterilisation are known, accessories with means of chopping food as well as accessories to beating doughs, foams and similar are known, but, nevertheless, a device that enables to join in a sole accessory all these functions is still unknown.

### DETAILED DESCRIPTION

The cooking accessory that is praised fills the technical gap previously exposed, thus a manual activation device highly versatile is offered.

To this end, and in a more specific way, the invention device is made from a support base over which is integrated a working chamber, materialized in a kind of bowl, superiorly opened and in whose bottom is settled a stub as turning element for the different accessories available in the device.

The chamber work is complemented by a closing lid in its upper part, through which the exit of the food to be treated is avoided. The lid includes a sit in its upper part with a central hole in which a manual operating control is destinated to be implemented.

Hence, the central hole remains aligned with the inferior stub, so that between these both elements one of the three accessories that operates in the device is destinated to be implemented in a selective manner.

The first of the accessories consist in a food chopping blade, materialized in a hollow shaft, that is attached to said stub in its bottom, and that includes a series of perimeter blades positioned in different highs.

The second of the accessories consist in a beaten element, equally materialized in a hollow shaft that is attached to said stub in its bottom, and that includes vanes specifically designed to beat doughs, eggs, etc.

The third of the accessories consist in a kind of cylindrical drum, open in its upper part, in which a central hollow shaft that is attached to said stub in its bottom and that includes a surface as a grill or cage that enables to place inside it the food to drain, so that through the spun of the mentioned drum, the water that carry out for example the vegetables introduced in the drum will be expelled out of said drum through its grill or cage structure, and vegetables will remain perfectly drained.

Therefore, all the accessories are destinated to be activated in rotation through its corresponding hollows, so that said hollows includes a superior tongue-and-groove joint that is faced to the hole of the device lid.

For its part, the operating control is materialized in a telescopic element, in which the superior button that is manually activated operates, which is inferiorly moved against a spring tension and that is linked to a vertical zipper that in its shift moves some gears that are associated to a male shaft that emerges in its bottom from the operating control basis, and that passed through the lid hole in order to be inserted in a tongue-and-groove joint way in the rotation shaft of the accessory chosen. So that, through this mechanism, the vertical pressure movement over the control is transformed in a rotation movement to the correspondent accessory in the work chamber.

It is worth mentioning that the manual operating control could include a blocking element that prevents rotation of the male shaft, in order to prevent accidents, for example in case that the linked accessory consists in a food chopping blade.

### BRIEF DESCRIPTION OF THE DRAWINGS

In order to complete the description that hereinafter will be indicated and to provide a better understanding of the characteristics of the invention, according to an example of a practical preferred embodiment of the invention, a set of plans is attached to such description as part of it, which represents, with illustrative and no restrictive character, the following:

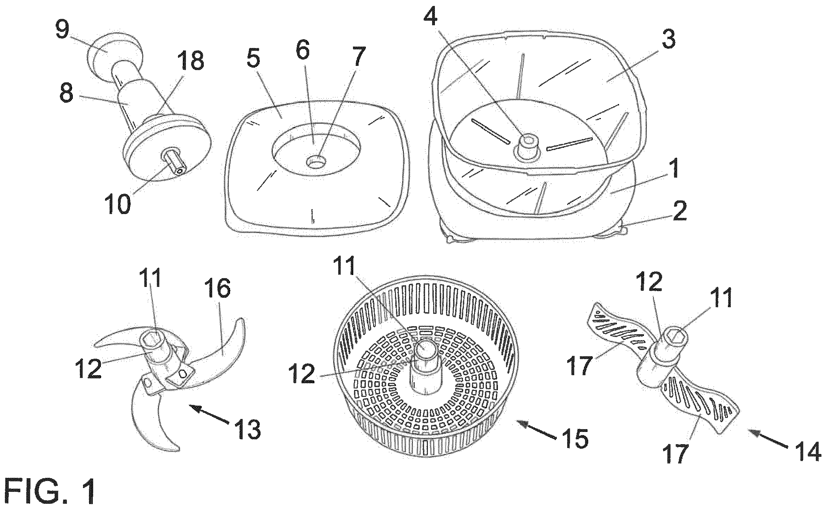

Figure 1.- Shows a perspective and exploded view of a multifunctional cooking accessory made according to the object of the present invention.

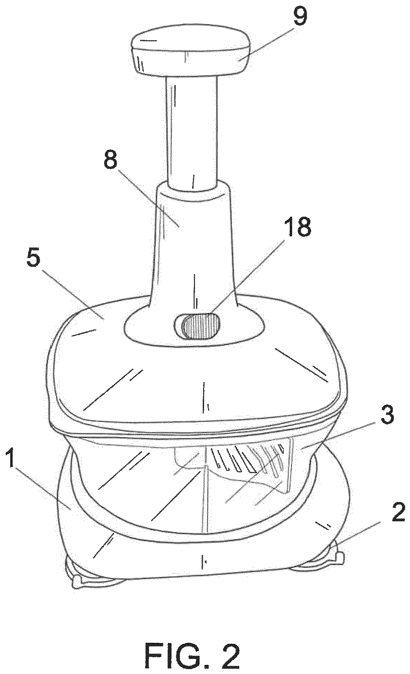

Figure 2.- Shows a perspective view of the device of the previous figure duly assembled.

### DESCRIPTION OF THE PREFERRED EMBODIMENTS

In light of the related figures, it could be appreciated how the multifunctional cooking accessory that is praised is made from a support and stabilization basis (1) of the device, that could include suction cups (2) or other adherent elements, a basis (1) over which a work chamber (3) is placed, materialized in a sort of transparent bowl, superiorly opened, and in which bottom a stub (4) is placed as a turning element for the different accessories available in the device.

The bottom of the work chamber (3) will be preferably a circular layout, while such divergent configuration chamber in ascending order can progressively modify its section until finishing in a mouthpiece aiming to the square, which has arched sides and significantly rounded vertex.

Over the work chamber (3) mouthpiece a closing lid (5) is attachable and detachable, which includes a superior seat (6), with a hole (7), over which seat a manual operating control (8) is attachable.

More specifically, the manual operating control (8) in which a superior push button operates (9) is materialized in a telescopic element, and is designed to be pushed manually, against the tension of an internal spring.

Said push button (9) is internally linked to a vertical zipper that in its displacement moves gears that are linked to a male shaft (10) that inferiorly rises from the basis of such operating control.

In this way, the vertical movement of the push button (9) causes a turning movement of the male shaft (10), which in an assembly situation passes through the hole (7) of the lid (5) and fits in a tongue-and-groove joint (11) of the turning shaft (12) of the accessory at issue that enables it to turn.

In this sense, the participation of three accessories has been foreseen: an accessory or chopping element (13), a beating element (14) and a spinning element (15).

The referred elements include a hollow turning shaft (12), superiorly finished in said tongue-and-groove joint (11), as well as inferiorly in a formal hole and dimensionally adapted to the stub (4) of the bottom of the work chamber (3), over which they are supported and turned.

The chopping element (13) includes several horizontal blades (16) that are arched and placed in different positions or phases in plant, as well as in different highs.

Moreover, the beating element (14) includes two vanes (17) of laminated configuration, which adopt a sinusoidal configuration in plant, including slots over its surface, to optimize the generation of a flow that enables to beat or mix the ingredients contained in the work chamber (3).

Finally, the spinning element (15) its materialized in a cylindrical drum, superiorly opened, in which a hollow turning shaft (12) is integrated in its central area that is inferiorly connected to said stub (4) and that includes a surface in a grill or cage manner that enables to put inside the food to be drained, thereby through the drain of said drum the water that carry, for example, the vegetables placed inside the drum will be expelled outside of said drum through its grill or cage structure, and vegetables will remain perfectly drained.

Lastly, the manual operating control (8) can include a blocking element (18) that prevents the turning of the male shaft (10) as a security measure.

## Claims

1. ^{a}.- Multifunctional cooking accessory, constituted from a support and stabilization basis (1) over which a work chamber (3) is placed, materialized in a type of transparent bowl, superiorly opened and in which bottom is placed a stub (4) as turning element for the different mechanisms of the device; the work chamber (3) is closed by a lid (5) that includes a superior seat (6), with a hole (7) vertically confronted to the stub (4); over which seat a manual operating control (8) is connectable, materialized in a telescopic element, in which a push button (9) operates and that is vertically movable against the tension of an internal spring, and that is internally linked to a vertical zipper that is its displacement moves some gears that provokes the turning of a male shaft (10) that passes through the hole (7) of the lid (5), which is designed to selectively adapt and jointly with the stub (4) one of the following working elements:
• A chopping element (13);
• A beatting element (14);
• A spinning element (15);
Having foreseen that these working elements include a hollow turning shaft (12), superiorly finished in a tongue-and-groove joint (11) complementary to the male shaft (10), as well as inferiorly in a formal hole and dimensionally suitable to the stub (4) of the bottom of the work chamber (3), over which they lean and turn.

2. ^{a}.- Multifunctional cooking accessory, according to the 1^{st} claim, wherein the chopping element (13) includes several blades (16) that are arched horizontally and placed in different phases in plant, as well as in different highs.

3. ^{a}.- Multifunctional cooking accessory, according to the 1^{st} claim, wherein the beating element (14) includes two blades (17) of laminate configuration and that adopt a sinusoidal configuration in plant including slots over its surface.

4. ^{a}.- Multifunctional cooking accessory, according to 1^{st} claim, wherein the spinning element (15) its materialized in a cylindrical drum, superiorly opened, in which a turning shaft (12) is integrated and that includes a surface in a grill or cage manner that receives the food to be drained.

5. ^{a}.- Multifunctional cooking accessory, according to the 1^{st} claim, wherein the manual operating control (8) includes a blocking element (18) for itself.

6. ^{a}.- Multifunctional cooking accessory, according to the 1^{st} claim, wherein the support basis (1) includes stabilizer suction cups.
